# EUROPEAN PATENT APPLICATION

(11) **EP 3 819 077 A1**
(43) Date of publication of application: **12.05.2021**
(21) Application number: 20206264.2
(22) Date of filing: 06.11.2020
(51) Int. Cl.: B23Q 7/14, A61C 13/00

(54) **ADAPTER FOR CUTTING MACHINE**

(30) Priority: 07.11.2019 JP 2019202127
(71) Applicant: DGSHAPE Corporation, Hamamatsu-shi, Shizuoka 431-2103 (JP)
(72) Inventor: SATO, Ryo, Hamamatsu-shi, Shizuoka (JP)
(74) Representative: Daub, Thomas

(57) **Abstract**

An adapter for a cutting machine includes a support portion abutting against an outer peripheral portion of a plate-shaped workpiece and being configured to support the plate-shaped workpiece, and a connecting portion connecting to the support portion, surrounding the outer peripheral portion and the support portion, and forming a gap between the connecting portion and the outer peripheral portion. The adapter for the cutting machine is configured to be held by a holder of the cutting machine.

## Description

### BACKGROUND OF THE INVENTION

### <Field of the Invention>

The present invention relates to an adapter for a cutting machine.

### <Description of Related Art>

A related art adapter is used for a cutting machine processing a workpiece and has a function of holding the workpiece (see, for example, JP-B-6533319).

[Patent Literature 1] JP-B-6533319

In the above-described cutting machine, an adapter may interfere with a tool for processing a workpiece. Therefore, the size and the shape of the processed workpiece may be limited.

### SUMMARY

One or more embodiments of the present invention provide an adapter for a cutting machine, by which the size and the shape of a processed workpiece are less likely to be limited.

One or more embodiments of the present invention provide an adapter for a cutting machine, the adapter includes a support portion abutting against an outer peripheral portion of a plate-shaped workpiece and being configured to support the plate-shaped workpiece, and a connecting portion connecting to the support portion, surrounding the outer peripheral portion and the support portion, and forming a gap between the connecting portion and the outer peripheral portion. The adapter for the cutting machine is configured to be held by a holder of the cutting machine.

According to one or more embodiments, an adapter for a cutting machine in which the size and the shape of a processed workpiece are less likely to be limited.

### BRIEF DESCRIPTION OF THE DRAWINGS

Fig. 1 is a longitudinal sectional view of a cutting machine, which illustrates a housing and a loading device of a processing machine body.
Fig. 2 is a cross-sectional view of the cutting machine, which illustrates the housing and the loading device of the processing machine body.
Fig. 3 is a top view of an adapter in a state in which a workpiece is held.
Fig. 4 is a perspective view of the adapter in a state in which the workpiece is held.
Fig. 5 is a perspective view illustrating the adapter in a state in which the workpiece is held, and a holding jig in a state in which the adapter is supported.
Fig. 6 is a perspective view of the adapter and the holding jig during processing work.
Fig. 7 is a sectional view of the adapter during the processing work and illustrates a relationship between a connecting portion and a processing tool.
Fig. 8 is a perspective view illustrating a state before and after attachment and detachment of the holding jig and the adapter.
Fig. 9 is a cross-sectional view illustrating the adapter in a state in which the workpiece is held, and the holding jig in a state in which the adapter is supported.
Fig. 10 is a perspective view of the workpiece.
Fig. 11(a) and 11(b) are top views of a picker and the adapter. Fig. 11(a) illustrates a state in which the picker is in an open position. Fig. 11(b) illustrates a state in which the picker is in a closed position.
Fig. 12 is a front view for illustrating operation of the cutting machine.
Fig. 13 is a front view for illustrating operation of the cutting machine.

### DETAILED DESCRIPTION

An embodiment of the present invention will be described below with reference to the drawings. However, various limitations that are technically preferable for carrying out the present invention are given to the embodiment described below. Therefore, the scope of the present invention is not limited to the following embodiment and examples.

### <Cutting machine>

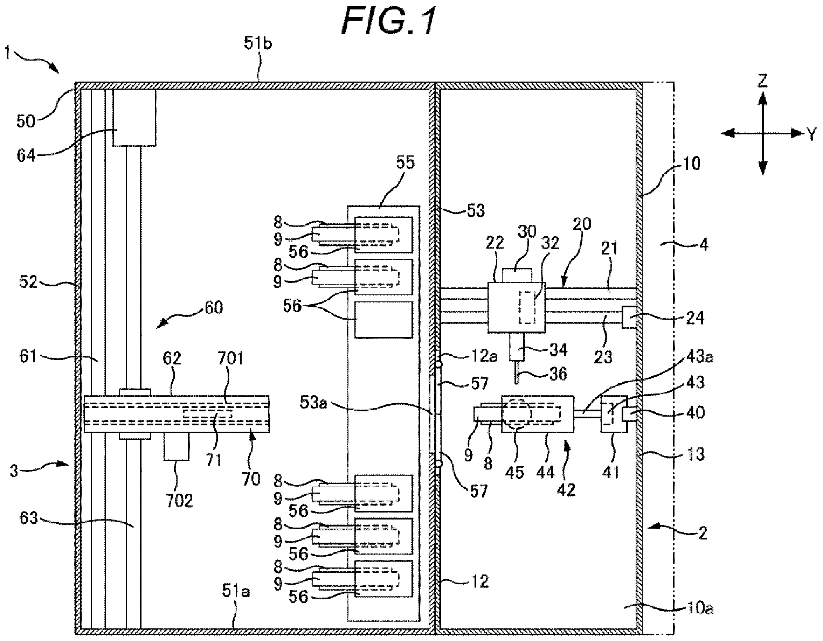

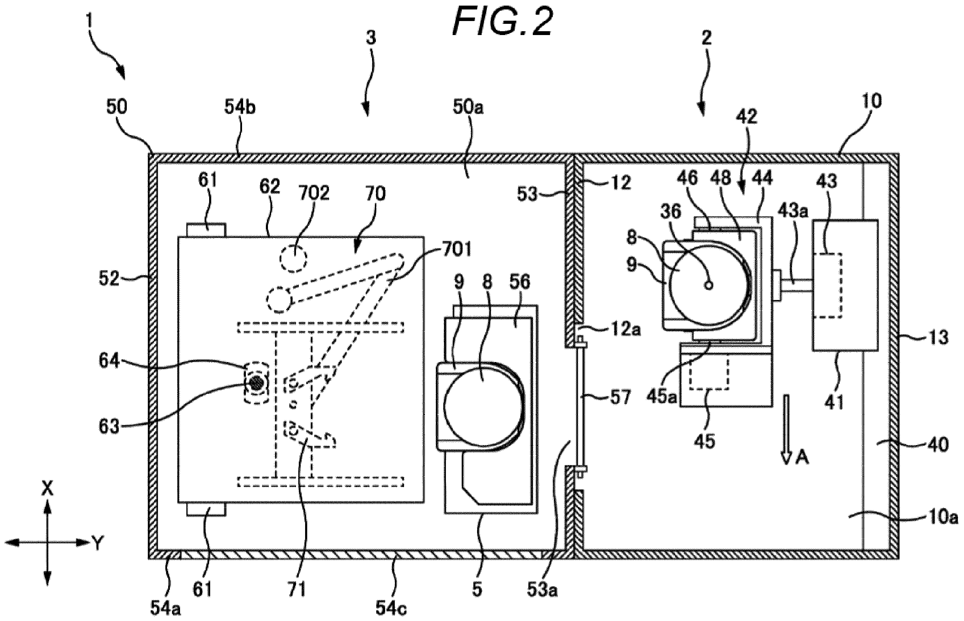

Fig. 1 is a front view of a cutting machine 1, which is an example of a dental processing machine, and Fig. 2 is a plan view of the cutting machine 1. In Figs. 1 and 2, an X axis, a Y axis, and a Z axis are illustrated as auxiliary lines representing directions. These X, Y, and Z axes are perpendicular to each other, an X-axis direction and a Y-axis direction are horizontal directions, and a Z-axis direction is a vertical direction. The X axis may be inclined relative to a horizontal plane, and the Z axis may be inclined relative to the vertical direction.

As illustrated in Figs. 1 and 2, the cutting machine 1 includes a processing machine body 2 that processes plate-shaped workpieces 8, a loading device 3 that performs loading and unloading of the workpieces 8 relative to the processing machine body 2, and a control unit 4 that controls the processing machine body 2 and the loading device 3.

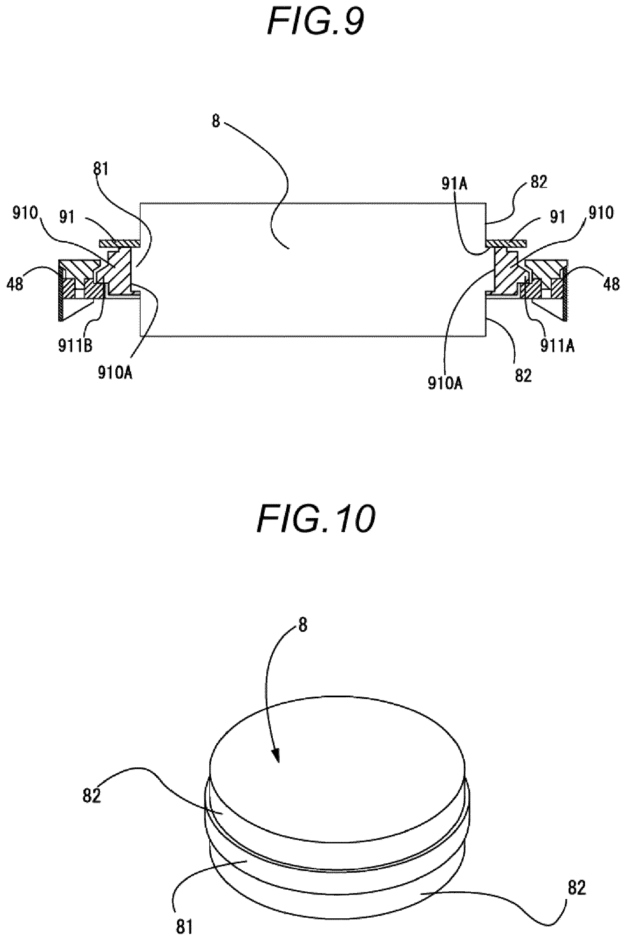

As illustrated in Fig. 10, the workpiece 8 is made of, for example, a ceramic material as a zirconia ceramic material, a resin material, a glass material, a metal material, or a wax material. The processed workpiece obtained by processing the workpiece 8 is, for example, an artificial tooth, a dental crown, a bridge, an abutment, or the like. The workpiece 8 is a disk-shaped member and includes, on an outer peripheral portion thereof, outer peripheral surfaces 82 protruding outward in a radical direction of the workpiece 8 and a protruding portion 81 protruding radically outward of the workpiece 8 than the outer peripheral surfaces 82. The protruding portion 81 has an outer diameter larger than that of the outer peripheral surface 82 and is formed over the entire outer peripheral portion of the workpiece 8.

### <Processing machine body>

The processing machine body 2 includes a housing 10, a spindle motor 32, a spindle 34, a cutting tool 36, a tilt mechanism 42, a holding jig 48, and a three-dimensional displacement mechanism. The three-dimensional displacement mechanism drives the spindle 34 to move in the Y-axis direction, the X-axis direction, and the Z-axis direction relative to the holding jig 48. Specifically, the three-dimensional displacement mechanism includes a Z-axis direction linear motion driving mechanism 30 that drives the spindle 34 to move in the Z-axis direction parallel to a rotation shaft of the spindle motor 32, a Y-axis direction linear motion driving mechanism 20 that drives the spindle 34 to move in the Y-axis direction, and an X-axis direction linear motion driving mechanism 40 that drives the holding jig 48 to move in the X-axis direction.

The housing 10 is provided in a box shape, and an internal space 10a is formed in the housing 10. A transportation port 12a is formed in a side portion 12 of the housing 10.

The Y-axis direction linear motion driving mechanism 20 includes a linear guide member 21, a carriage 22, a Y-axis direction linear motion transmission mechanism 23, and a motor 24. Left and right end portions of the linear guide member 21 are supported by side portions 12 and 13 of the housing 10 respectively, and are bridged between the side portions 12 and 13 such that the linear guide member 21 extends in the left-right direction. The extending direction of the linear guide member 21 is the Y-axis direction. The carriage 22 is slidably attached to the linear guide member 21. The carriage 22 is movable in the Y-axis direction along the linear guide member 21. The Y-axis direction linear motion transmission mechanism 23 is connected to the carriage 22, and the motor 24 is connected to the Y-axis direction linear motion transmission mechanism 23. The Y-axis direction linear motion transmission mechanism 23 is provided between the side portions 12 and 13, and the motor 24 is provided on the side portion 12. The Y-axis direction linear motion transmission mechanism 23 is, for example, a belt transmission mechanism, a chain transmission mechanism, a ball screw transmission mechanism, or a pinion rack mechanism, and transmits power of the motor 24 to the carriage 22. The carriage 22 is moved in the Y-axis direction by the motor 24.

The linear motion driving mechanism 30, the spindle motor 32, and the spindle 34 are mounted on the carriage 22. Specifically, the linear motion driving mechanism 30 and the spindle motor 32 are attached to the carriage 22, and the spindle 34 is connected to the spindle motor 32 and the linear motion driving mechanism 30 via a transmission mechanism. The spindle 34 is driven to move in the Z-axis direction by the linear motion driving mechanism 30 and is driven to rotate about a rotation shaft parallel to the Z axis by the spindle motor 32. The cutting tool 36 such as an end mill, a drill, a reamer, or a tap is attached to the spindle 34. The cutting tool 36 is detachably attached to the spindle 34, and a magazine in which a replacement cutting tool is accommodated is provided in the housing 10 (for example, on a movable body 41 to be described below).

The X-axis direction linear motion driving mechanism 40 is attached to the side portion 13 of the housing 10 such that the X-axis direction linear motion driving mechanism 40 is parallel to the X axis. The movable body 41 is connected to the linear motion driving mechanism 40 and is driven by the linear motion driving mechanism 40 to move in the X-axis direction.

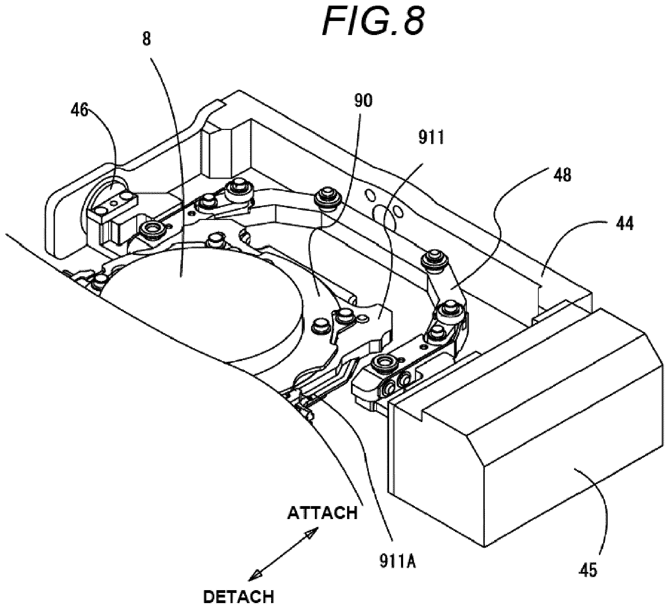

The tilt mechanism 42 and the holding jig 48 are attached to the movable body 41 (Fig. 8). The holding jig 48 holds an adapter 9 and the workpiece 8. The holding jig 48 has a U shape and has a function of engaging with the adapter 9 and holding the adapter 9 detachably. In detail, the adapter 9 can be received by and mounted on the holding jig 48 in an attaching direction as shown by a white arrow in Fig. 8. In addition, a mounted state of the adapter 9 is released by moving the adapter 9 in a detaching direction opposite to the attaching direction (Fig. 8). The detaching direction and the attaching direction are parallel to the Y axis. The holding jig 48 is an example of a holder in the present invention.

The tilt mechanism 42 swings the holding jig 48 and the workpiece 8 about a first rotation shaft parallel to the Y axis, and swings the holding jig 48 and the workpiece 8 about a second rotation shaft perpendicular to the first rotation shaft.

The tilt mechanism 42 includes a first swing motor 43, a swing rod 44, and a second swing motor 45. The first swing motor 43 is attached inside the movable body 41 such that an output rotation shaft thereof (first rotation shaft) 43a is parallel to the Y axis, and the output rotation shaft 43a thereof extends in the Y-axis direction from the inside to the outside of the movable body 41. An arch-shaped intermediate portion of the swing rod 44 is connected to the output rotation shaft 43a of the first swing motor 43. The second swing motor 45 is attached to an outer peripheral side of one end portion of the swing rod 44, and an output rotation shaft (second rotation shaft) 45a of the second swing motor 45 penetrates from the one end portion of the swing rod 44 toward the inner peripheral side. The output rotation shaft 45a of the second swing motor 45 is perpendicular to the output rotation shaft 43a of the first swing motor 43. One arch-shaped end portion of the holding jig 48 is connected to the output rotation shaft 45a of the second swing motor 45. The other end portion of the holding jig 48 is connected to the other end portion of the swing rod 44 via a rotation shaft 46 that is coaxial with the output rotation shaft 45a of the second swing motor 45. The angle of the rotation of the second swing motor 45 may be 360 degrees. However, the angle of the rotation is within a range of 0 ± 35 degrees and a range of 180 ± 35 degrees in the actual processing work. In other words, when a surface of the workpiece 8 is processed, the second swing motor 45 swings the workpiece 8 within a range of ± 35 degrees, and also swings the workpiece 8 within a range of ± 35 degrees relative to a back surface.

When the first swing motor 43 operates, the swing rod 44, the holding jig 48, and the workpiece 8 are swung around the output rotation shaft 43a of the first swing motor 43. When the second swing motor 45 operates, the holding jig 48, the adapter 9, and the workpiece 8 are swung about the output rotation shaft 45a of the second swing motor 45.

### <Loading device>

The loading device 3 includes a housing 50, a stocker 55 provided in the housing 50, a transfer device 70 that transfers the workpiece 8 and the adapter 9 such that the workpiece 8 and the adapter 9 are fed in the Y-axis direction, and a lifting device 60 that moves the transfer device 70 up and down in the housing 50.

The housing 50 is formed in a box shape, and an internal space 50a is formed in the housing 50. A side portion 53 of the housing 50 is fixed to the side portion 12 of the housing 10 of the processing machine body 2, and the housing 50 and the housing 10 are arranged in parallel. A transportation port 53a is formed in the side portion 53 of the housing 50. The transportation port 53a overlaps the transportation port 12a of the housing 10, so that the internal space 50a of the housing 50 communicates with the internal space 10a of the housing 10 through the transportation ports 12a and 53a.

A door 57 for opening and closing the transportation port 53a is provided on the side portion 53 of the housing 50. The door 57 opens toward the outside of the housing 50 and toward the inside of the housing 10. The door 57 is a normally closed door that is normally closed by biasing means such as a spring.

The stocker 55 is disposed on the side portion 53 side of the housing 50. In the stocker 55, a plurality of workpieces 8 can be vertically aligned and stored in a posture in which a plurality of workpieces 8 are laid down horizontally. Specifically, a plurality of holding shelves 56 are arranged side by side in the up-down direction in the stocker 55. These holding shelves 56 are divided into two groups of upper and lower groups, and an interval between the lowermost holding shelf 56 of the upper group and the uppermost holding shelf 56 of the lower group is wider than an interval between the other adjacent holding shelves 56 of the same group. A position (height) of the transportation port 53a of the housing 50 is between the lowermost holding shelf 56 of the upper group and the uppermost holding shelf 56 of the lower group. In the present embodiment, the number of the holding shelves 56 in the upper group (specifically, three) and the number of holding shelves 56 of the lower group (specifically, three) are the same, but the present invention is not limited to this example.

The adapter 9 can be inserted into and removed from the holding shelf 56 in the Y-axis direction, and the adapter 9 and the workpiece 8 mounted on the adapter 9 can be inserted into the holding shelf 56, or a cassette and the workpiece 8 can be pulled out from the holding shelf 56. Here, the direction in which the adapter 9 is inserted into the holding shelf 56 is the same as the direction of moving from the housing 50 toward the housing 10 through the transportation ports 12a and 53a, and the direction in which the adapter 9 is pulled out from the holding shelf 56 is the same as the direction of moving from the housing 10 toward the housing 50 through the transportation ports 12a and 53a. A lock mechanism that uses magnetic attachment, suction, clamping, locking, or engagement is provided on the holding shelf 56. In a state in which the adapter 9 is inserted into the holding shelf 56, the adapter 9 is locked to the holding shelf 56 by the lock mechanism, and the locking can be released.

A front portion 54a of the housing 50 is provided with a door 54c to mount the adapter 9 and the workpiece 8 on the stocker 55 or to remove the adapter 9 and the workpiece 8 from the stocker 55. The door 54c may be provided on the side portion 52 or a rear portion 54b other than the front portion 54a.

The lifting device 60 is provided on a side portion 52 side, which is opposite to the side portion 53, in the housing 50. The lifting device 60 includes a linear guide member 61, a lifting body 62, a linear motion transmission mechanism 63, and a motor 64. The linear guide member 61 is attached to the housing 50 such that the linear guide member 61 extends in the up-down direction (Z-axis direction), and the lifting body 62 is slidably attached to the linear guide member 61. The lifting body 62 is movable in the Z-axis direction along the linear guide member 61 at a position (lifting position) opposite to the transportation ports 12a and 53a regarding the stocker 55. The linear motion transmission mechanism 63 is connected to the lifting body 62, and the motor 64 is connected to the linear motion transmission mechanism 63. The linear motion transmission mechanism 63 is provided between a top portion 51b of the housing 50 and a bottom portion 51a of the housing 50, and the motor 64 is provided on the top portion 51b of the housing 50. The linear motion transmission mechanism 63 is, for example, a ball screw transmission mechanism, a pinion rack mechanism, a belt transmission mechanism, or a chain transmission mechanism, and transmits the power of the motor 64 to the lifting body 62. The lifting body 62 is moved in the Z-axis direction by the motor 64.

As described above, since the Z axis is perpendicular or oblique to the horizontal plane, the lifting body 62 moves up and down perpendicularly relative to the horizontal plane, or moves up and down obliquely relative to the horizontal plane.

The lifting body 62 is provided with the transfer device 70. The transfer device 70 includes a picker (for example, a clamper) 71, a feeding mechanism 701, a motor 702, or the like. The feeding mechanism 701 includes an arm mechanism that can be deployed and folded in the Y-axis direction, or the like. A base portion of the feeding mechanism 701 is attached to the lifting body 62, and a distal end portion of the feeding mechanism 701 is provided with the picker 71. The motor 702 is connected to the feeding mechanism 701, and the power of the motor 702 is transmitted to the feeding mechanism 701. The feeding mechanism 701 is driven by the motor 702. By the power of the motor 702, the feeding mechanism 701 is deployed and elongated in the Y-axis direction from the lifting body 62 to the side portion 13, or is folded and contracted in the opposite direction. A trajectory of the picker 71 accompanying expansion and contraction of the feeding mechanism 701 is a straight line substantially parallel to the Y axis, and a range of the trajectory of the picker 71 depending on the feeding mechanism 701 is from the lifting body 62 to the holding jig 48 along the Y axis.

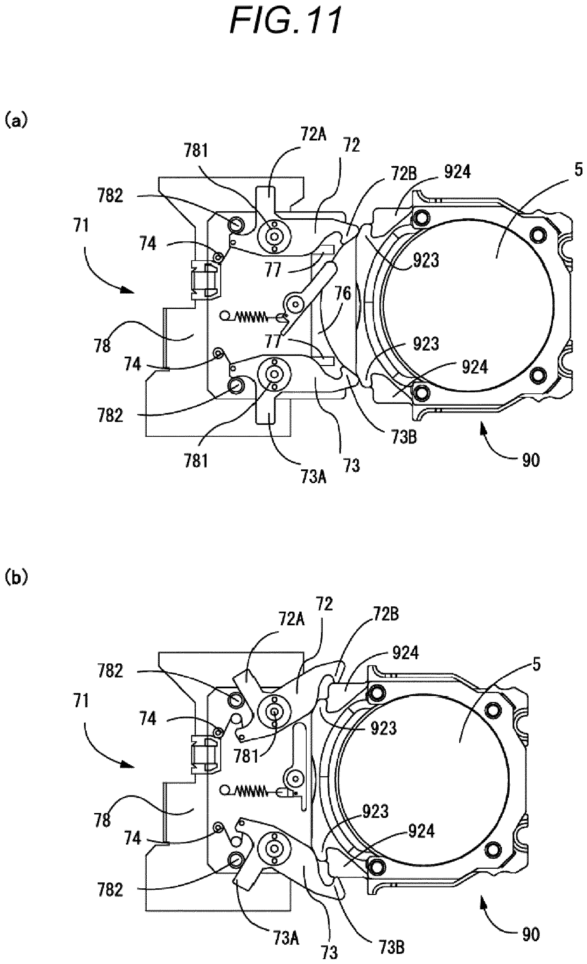

As illustrated in Fig. 11, the picker 71 includes a pair of hooks 72 and 73, springs 74, a fixing portion 76, leaf springs 77, and a body portion 78.

The body portion 78 is a plate-shaped member extending in the X-axis direction and the Y-axis direction. The body portion 78 includes two shafts 781 and two protrusions 782 extending in the Z-axis direction. The two shafts 781 rotatably support the hooks 72 and 73, respectively.

The hooks 72 and 73 are disposed on an upper surface of the body portion 78 such that the hooks 72 and 73 face each other. Protrusions 72A and 73A are respectively formed at end portions of the hooks 72 and 73, and engaging portions 72B and 73B formed by being bent are respectively formed at the other end portions of the hooks 72 and 73. Each of the hooks 72 and 73 can be rotated between an open position (Fig. 11(a)) and a closed position (Fig. 11(b)) with the shaft 781 as an axis.

The rotation of the hooks 72 and 73 is restricted by abutting against the protrusions 782. Specifically, when the hooks 72 and 73 rotate and reach the open position, the protrusions 72A and 73A respectively abut against the protrusions 782, and the rotation of the hooks 72 and 73 is restricted. In addition, when the hooks 72 and 73 rotate toward the closed position, the protrusions 782 respectively abut against trailing end portions of the hooks 72 and 73, and the rotation of the hooks 72 and 73 is restricted.

The spring 74 is a torsion coil spring and has a function of applying an elastic force to the hooks 72 and 73. One end portion of the spring 74 engages with the body portion 78 and the other end portion thereof engages with the hook 72 or the hook 73. The springs 74 biases the hooks 72 and 73 from the open position toward the closed position, respectively.

The fixing portion 76 is a plate-shaped member that is fixed so as to protrude in the Y-axis direction from the body portion 78. An arc-shaped notch is formed at an end portion of the fixing portion 76.

The leaf spring 77 extends in the Y-axis direction from the fixed portion 76, and a pair of plate springs 77 are provided on the fixing portion 76. The leaf springs 77 have a function of respectively biasing members placed on the fixing portion 76 toward the hooks 72 and 73.

### <Control unit>

The control unit 4 controls the linear motion driving mechanism 20 (particularly, the motor 24), the linear motion driving mechanism 30, the spindle motor 32, the linear motion driving mechanism 40, the tilt mechanism 42 (particularly, the motors 43 and 45), the lifting device 60 (particularly, the motor 64), and the transfer device 70 (particularly, the motor 702). The control unit 4 is provided in, for example, the housing 10. The control unit 4 is a control circuit including various drive circuits (for example, a motor driver), a microcomputer (for example, a program logic controller), and the like.

### <Adapter>

The workpiece 8 is held by the holding jig 48 in a state of being mounted on the adapter 9. The adapter 9 surrounds a part of an outer peripheral surface of the workpiece 8 to abut against the workpiece 8 and to support the workpiece 8.

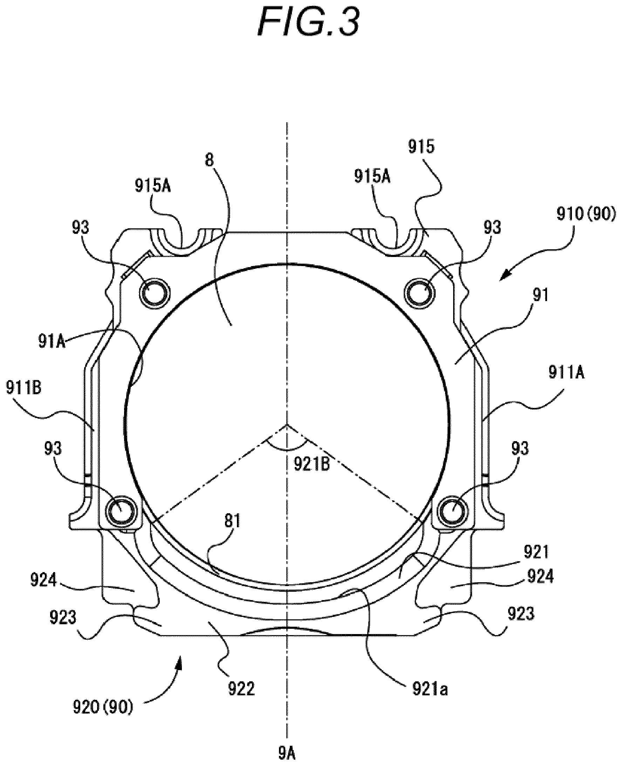

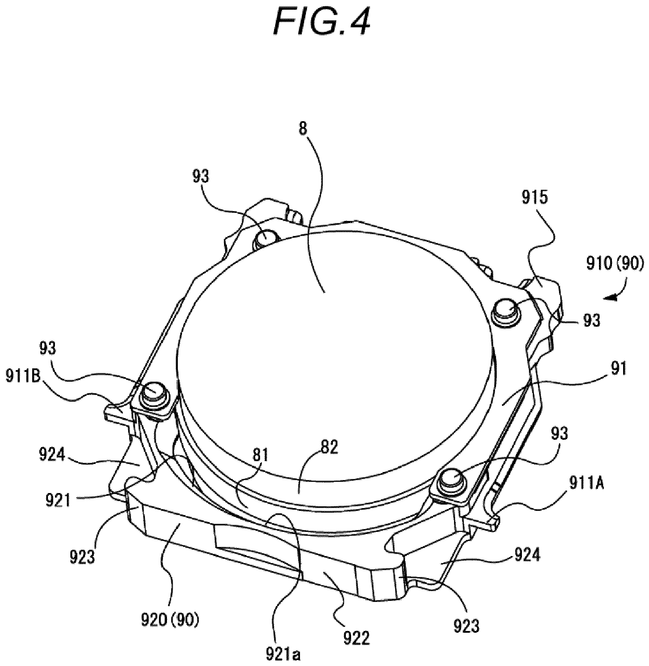

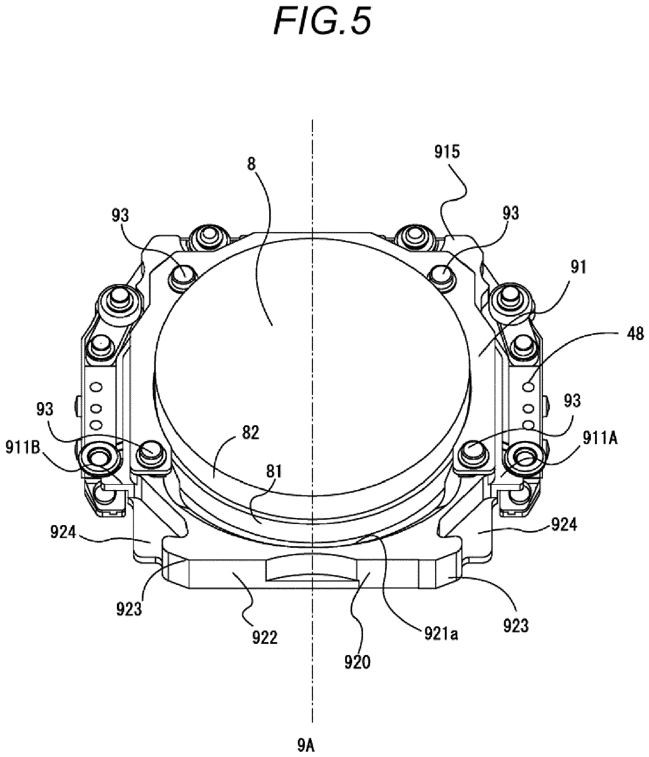

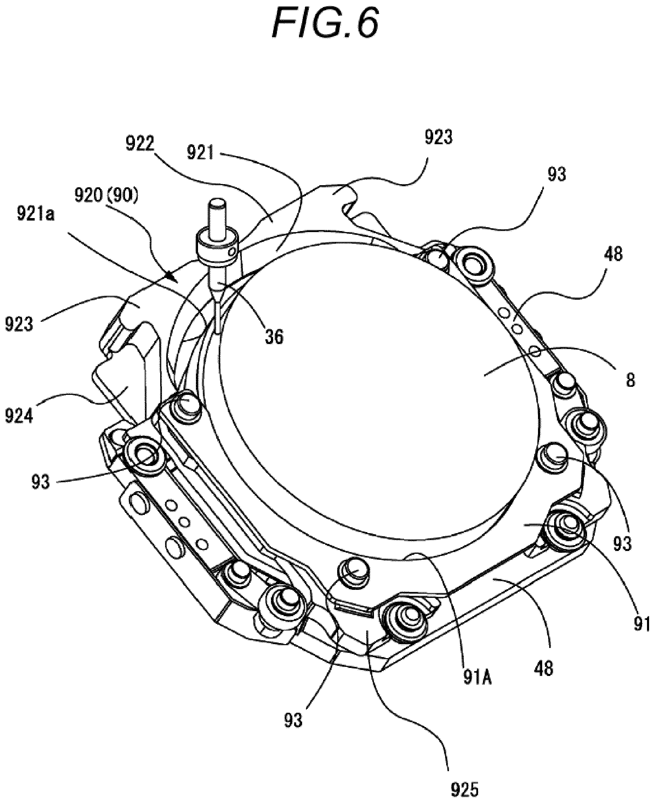

As illustrated in Figs. 3 to 9, the adapter 9 is a member formed symmetrically about a central axis 9A and includes a frame 90, a fastener 91, and screws 93. The fastener 91 is detachably fixed to the frame 90 by the screws 93.

The frame 90 includes a support portion 910 and a connecting portion 920. The support portion 910 is a member having a substantially flat plate shape as illustrated in Figs. 3 to 6, and is formed in a substantially U shape symmetrical about the central axis 9A in a plan view. The support portion 910 includes a support surface 910A (Fig. 9) formed in an arc shape in a plan view, guide protrusions 911A and 911B, and a rear portion 915. The guide protrusions 911A and 911B are examples of an engaging portion in the present invention.

The curvature of the support surface 910A is approximately equal to the curvature of the protruding portion 81. The support surface 910A has a function of abutting against and supporting the protruding portion 81 of the workpiece 8.

The guide protrusions 911A and 911B are symmetrically formed and disposed about the central axis 9A and are engaged with the holding jig 48. The guide protrusions 911A and 911B are both formed in a substantially flat plate shape and protrude outward from side surfaces of the support portion 910.

The rear portion 915 is a member that is formed on a side opposite to the connecting portion 920 in the frame 90 and faces the connecting portion 920. Arc-shaped recessed portions 915A are formed at two locations of the rear portion 915 (Fig. 3). The two recessed portions 915A are disposed symmetrically about the central axis 9A. The rear portion 915 has a function of abutting against the holding jig 48 and being supported by the holding jig 48. The rear portion 915 is an example of the engaging portion in the present invention.

The connecting portion 920 is formed in a substantially U shape symmetrical about the central axis 9A in a plan view, and two end portions of the connecting portion 920 are integrally connected to end portions of the support portion 910. In a state in which the workpiece 8 is mounted on the adapter 9 (hereinafter, also referred to as "during mounting"), the connecting portion 920 and the support portion 910 surround the outer peripheral portion of the workpiece 8. In a state in which the adapter 9 is attached to the holding jig 48 (hereinafter, also referred to as "during attaching"), the connecting portion 920 is located on the upstream side in the attaching direction relative to the support portion 910, in other words, on the downstream side in the detaching direction. The connecting portion 920 is formed in a substantially arc shape and includes an inner peripheral portion 921 facing the workpiece 8, an outer peripheral portion 922 supporting the inner peripheral portion 921 and engaging with the picker 71, engaged portions 923 protruding outward from the outer peripheral portion 922, and a bottom plate 924.

The inner peripheral portion 921 faces the outer peripheral portion of the workpiece 8 during the mounting. A gap 921a is located on the downstream side in the detaching direction relative to the workpiece 8 during the attaching. A center of an arc formed by the inner peripheral portion 921 in the plan view substantially coincides with a position of an axis center 8A of the workpiece 8 during the mounting. During the mounting, the inner peripheral portion 921 faces the outer peripheral portion of the workpiece 8 at a constant distance from the workpiece 8, and thus the gap 921a is formed between the inner peripheral portion 921 and the workpiece 8. The gap 921a is formed in an arc shape, and a central angle 921B of the arc shape of the gap 921a is approximately 105 degrees in the present embodiment (Fig. 3). However, the central angle 921B is not limited to 105 degrees and may be set as appropriate. The central angle 921B is set based on the size and the shape of a tooth mold, which is processed in, for example, a dental processing machine, and preferably falls within a range of 90 degrees to 120 degrees.

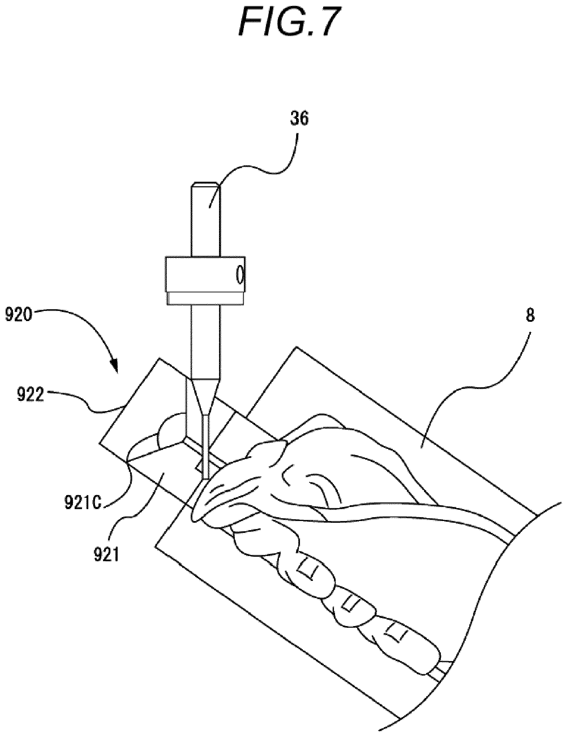

As illustrated in Fig. 7, the inner peripheral portion 921 has a mountain-shaped cross-sectional shape protruding radially inward of the connecting portion 920. An angle 921C of an apex of this cross section is 110 degrees in the present embodiment. As described above, the swing range of the adapter 9 by the tilt mechanism 42 is set to 35 degrees in the up direction and in the down direction, that is, a swing angle of 70 degrees in the up-down direction in the present embodiment. The angle 921C is adapted to the swing angle and is designed to prevent the adapter 9 from interfering with the cutting tool 36 and interfering with the processing work even when the second swing motor 45 swings the adapter 9 to the limit. Specifically, in the present embodiment, the angle 921C is determined based on the expression "180 - swing angle".

On the other hand, the cross section of the connecting portion 920 is preferably as large as possible from the viewpoint of strength, rigidity, durability, and the like. Therefore, the angle 921C is preferably set in a range of 90 degrees to 120 degrees. For example, the angle 921C may be set to 90 degrees to allow a margin for working, and a material having excellent strength and rigidity may be used for the connecting portion 920. Alternatively, the connecting portion 920 may be made thin, and the angle 921C may be set to 120 degrees, which is converse to the above example.

The bottom plate 924 is a flat plate-shaped member protruding from the outer peripheral portion 922. The bottom plate 924 is formed in a substantially triangular shape in a plan view. The bottom plate 924 has a function of engaging with the picker 71.

The fastener 91 is a flat plate-shaped member formed in a U shape and has an arc-shaped inner peripheral portion 91A. The mounting and detachment of the workpiece 8 to the adapter 9 is performed by attaching/detaching the fastener 91 to/from the support portion 910. The radius of curvature of the inner peripheral portion 91A is substantially equal to the radius of curvature of the outer peripheral surface 82. When the workpiece 8 is mounted, the fastener 91 is fixed to the frame 90, i.e., to the support portion 910 in the present embodiment by four screws 93. As a result, the protruding portion 81 is sandwiched by the fastener 91 and the support portion 910 (Fig. 9). The inner peripheral portion 91A abuts against the outer peripheral surface 82 of the workpiece 8 to prevent the workpiece 8 from moving in the radial direction.

### <Operation and use method of cutting machine>

Operation of the cutting machine 1 and a method of using the cutting machine 1 will be described.

### (1) Initial state

When the cutting machine 1 is started, the control unit 4 operates each part of the cutting machine 1 to an initial state. Specifically, the linear motion driving mechanisms 20, 30, and 40 are actuated by the control unit 4 so that the holding jig 48 moves below the spindle 34. The tilt mechanism 42 is actuated by the control unit 4 so that the holding jig 48 is in a state of being laid down horizontally (in a state in which holding jig 48 is parallel to the Y axis and the X axis). Further, the transfer device 70 is contracted by the control unit 4 so that the picker 71 is pulled into the lifting body 62. The lifting device 60 is actuated by the control unit 4 to move the lifting body 62 to a predetermined standby position (for example, an upper end portion of the housing 50 or a position above the uppermost holding shelf 56).

### (2) Movement to a height of a holding shelf

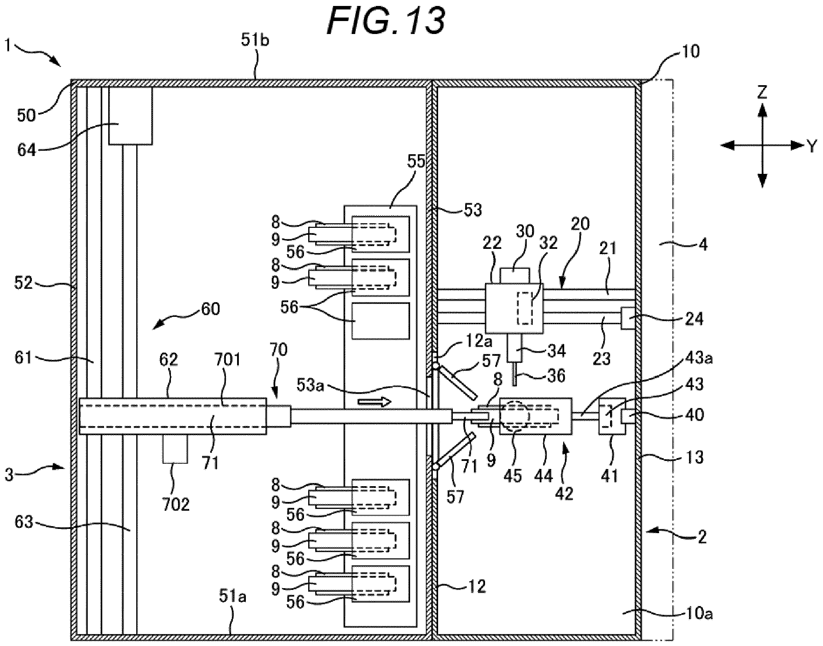

Next, the lifting device 60 is controlled by the control unit 4. As a result, as illustrated in Fig. 13, the lifting body 62 is moved by the motor 64 to a height of any one of the holding shelves 56.

### (3) Pickup

The lifting body 62 is moved by the motor 64 to the height of any one of the holding shelves 56, the feeding mechanism 701 of the transfer device 70 is deployed and elongated by the motor 702, and the picker 71 approaches the holding shelf 56 in the Y-axis direction.

When the picker 71 reaches the adapter 9, the connecting portion 920 is placed on the fixing portion 76, and the picker 71 further grasps the adapter 9. Specifically, when the hooks 72 and 73 are in the open position, the picker 71 reaches the adapter 9, and then the hooks 72 and 73 are moved to the closed position. The engaging portions 72B and 73B move on the bottom plate 924. The engaged portions 923 engage with the engaging portions 72B and 73B, respectively.

At this time, the connecting portion 920 is biased toward the hooks 72 and 73 by the leaf springs 77. The connecting portion 920 is sandwiched by the leaf springs 77 and the hooks 72 and 73.

As described above, the picker 71 can grasp and move the adapter 9 by the engagement with the engaged portions 923 and sandwiching the connecting portion 920.

### (4) Removal

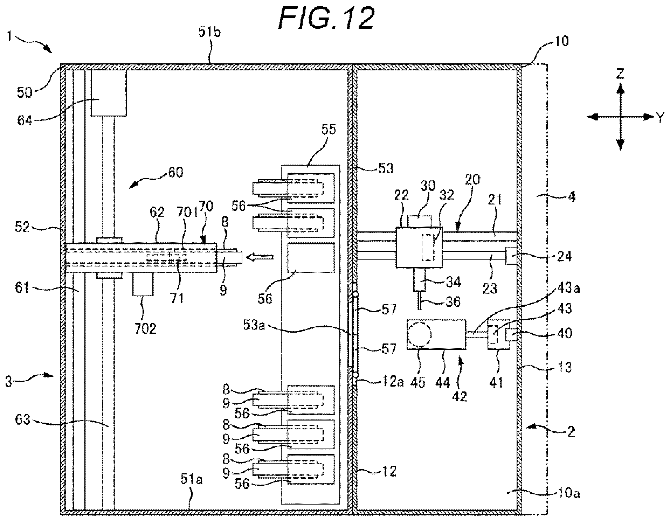

As a result, the feeding mechanism 701 of the transfer device 70 is folded and contracted by the motor 702, and the picker 71 is separated from the holding shelf 56 in the Y-axis direction (Fig. 12). Then, when the adapter 9 and the workpiece 8 are removed from the holding shelf 56 and the picker 71 reaches the lifting body 62, the transfer device 70 and the motor 702 are stopped. Next, the lifting body 62 is moved (raised or lowered) by the motor 64 to the height of the transportation ports 12a and 53a.

Next, the holding jig 48 is moved in the X-axis direction by the linear motion driving mechanism 40 until a position of the holding jig 48 in the X-axis direction is aligned with the transportation ports 12a and 53a.

### (5) Loading

As illustrated in Figs. 13 and 8, the feeding mechanism 701 of the transfer device 70 is deployed and elongated by the motor 702, and the picker 71 is moved in the Y-axis direction and the attaching direction and moves toward the holding jig 48. When the picker 71 passes through the transportation ports 12a and 53a, the door 57 is pushed and opened by the feeding mechanism 701, the picker 71, or the adapter 9 (Fig. 13).

Then, the adapter 9 reaches the holding jig 48 and is held by the holding jig 48. At this time, the rear portion 915 abuts against the holding jig 48 and is supported by the holding jig 48. Further, the holding jig 48 engages with and supports the guide protrusions 911A and 911B so as to vertically sandwich the guide protrusions 911A and 911B (Fig. 9).

When the holding of the adapter 9 by the holding jig 48 is completed, the engagement between the picker 71 and the adapter 9 is released. Specifically, in the picker 71, the hooks 72 and 73 are moved to the open position respectively, and the engagement between the engaging portions 72B and 73B and the engaged portions 923 is released.

### (6) Retraction

Next, the transfer device 70 is controlled by the control unit 4. As a result, the feeding mechanism 701 of the transfer device 70 is folded and contracted by the motor 702, and the picker 71 is separated from the holding jig 48 in the Y-axis direction. The fixing portion 76, the hooks 72 and 73, and the leaf spring 77 are separated from the adapter 9 along the Y-axis direction. In this manner, the picker 71 is completely in a non-contact state with the adapter 9.

Then, when the picker 71 reaches the lifting body 62 through the transportation ports 12a and 53a, the transfer device 70 and the motor 702 are stopped. When the picker 71 enters the inside of the housing 50, the door 57 is closed by the biasing force of the biasing means.

### (7) Processing

Next, the spindle motor 32 is actuated by the control unit 4. Then, the spindle 34 and the cutting tool 36 are rotationally driven by the spindle motor 32. In a state in which the spindle motor 32 is actuated, the control unit 4 controls the linear motion driving mechanisms 20, 30, and 40. As a result, the spindle 34 and the cutting tool 36 are moved up and down by the linear motion driving mechanism 30 while being moved in the Y-axis direction by the linear motion driving mechanism 20, and the workpiece 8 and the holding jig 48 are moved in the X-axis direction by the linear motion driving mechanism 40. Therefore, a relative three-dimensional position of a distal end of the cutting tool 36 relative to a central point of the workpiece 8 (an intersection of the first rotation shaft and the second rotation shaft of the tilt mechanism 42) is displaced. When the cutting tool 36 abuts against the workpiece 8 during such a displacement, the workpiece 8 is cut by the cutting tool 36. When the control unit 4 controls the tilt mechanism 42 during cutting of the workpiece 8, the holding jig 48 and the workpiece 8 are swung around the output rotation shafts 43a and 45a of the motors 43 and 45 by the tilt mechanism 42. As a result, a contact angle between the cutting tool 36 and the workpiece 8 is displaced.

The connecting portion 920 has a mountain-shaped cross section and the gap 921a is formed between the inner peripheral portion 921 and the workpiece 8, so that interference with the cutting tool 36 is prevented even if the adapter 9 is swung. As illustrated in Fig. 7, even in the case of processing a large tooth mold, the cutting tool 36 can contact the workpiece 8 through the gap 921a and the processing work can be performed with a margin.

### (8) Reception

When the work is completed, the adapter 9 is picked up by the picker 71 and returned to the holding shelf 56. That is, the work from (1) to (6) above is performed in a reverse order, and the transfer to the holding shelf 56 is completed.

During the pickup, the feeding mechanism 701 of the transfer device 70 is deployed and elongated by the motor 702, and the picker 71 approaches the connecting portion 920 of the adapter 9 along the Y-axis direction and the attaching direction. When the picker 71 reaches the adapter 9, the connecting portion 920 is placed on the fixing portion 76. The picker 71 reaches the adapter 9 with the hooks 72 and 73 being in the open position, and then the hooks 72 and 73 are moved to the closed position. The engaging portions 72B and 73B move on the bottom plate 924. The engaged portions 923 engage with the engaging portions 72B and 73B, respectively.

At this time, the connecting portion 920 is biased toward the hooks 72 and 73 by the leaf springs 77. The connecting portion 920 is sandwiched by the leaf springs 77 and the hooks 72 and 73. The picker 71 can grasp and move the adapter 9 by the engagement with the engaged portions 923 and sandwiching the connecting portion 920.

Next, the feeding mechanism 701 of the transfer device 70 is contracted by the motor 702, and the picker 71 moves in the Y-axis direction and in the detaching direction of fig 8 and is separated from the holding jig 48. At this time, the connecting portion 920 engaged with the picker 71 is located on the downstream side in the detaching direction and moves together with the picker 71. The guide protrusions 911A and 911B slide in the detaching direction along a side surface of the holding jig 48 to release the engagement and eventually the guide protrusions 911A and 911B are separated from the holding jig 48. The rear portion 915 is separated from the holding jig 48 to release the engagement with the holding jig 48. In this manner, the adapter 9 moves in the detaching direction until the adapter 9 is completely separated from the holding jig 48. Thereafter, the adapter 9 and the workpiece 8 are returned to the holding shelf 56.

### <Effects>

In the above embodiment, the adapter 9 is configured to be able to be held by the holding jig 48 of the cutting machine 1 that processes the plate-shaped workpiece 8. The adapter 9 includes the support portion 910 that abuts against the outer peripheral portion of the workpiece 8 and supports the workpiece 8. The adapter 9 further includes the connecting portion 920 connecting to the support portion 910, surrounding the outer peripheral portion of the workpiece 8 and the support portion 910 and forming the gap 921a between the connecting portion 920 and the outer peripheral portion.

In the above configuration, it is possible to perform the processing work through the gap 921a. Therefore, even in a case where the finished shape is large, it is possible to perform the processing work. Processing can also be performed in a case where a complicated shape is processed.

The connecting portion 920 has a mountain-shaped cross section protruding toward the outer peripheral portion of the workpiece 8. Therefore, it is possible to ensure a large cross-sectional shape and to form the gap 921a. Even in a case where the adapter 9 is swung, as illustrated in Fig. 7, interference between the connecting portion 920 and the cutting tool 36 can be avoided, and the work can be performed. In addition, since the connecting portion 920 has a large cross-sectional shape, it is possible to ensure the strength or rigidity of the adapter 9.

The connecting portion 920 is integrally connected to the support portion 910. Therefore, the adapter 9 can be manufactured with a simple configuration. Since there is no connection portion, the strength or rigidity of the adapter 9 is ensured.

Since the central angle 921B of the arc shape of the gap 921a is 90 degrees or more and 120 degrees or less, the cutting tool 36 can perform processing of a complicated shape around the front teeth through the gap 921a when processing a shape of a human tooth mold.

The support portion 910 includes the guide protrusions 911A and 911B that are engageable with the holding jig 48, and the rear portion 915. The support portion 910 is supported by the holding jig 48, so that the connecting portion 920 is not required to be provided with an engaging portion or the like, and a simple configuration can be obtained. It is not required to provide a configuration in which the connecting portion 920 is held, so that in the cutting machine 1, it is not required to dispose a device or a member around the connecting portion 920, and the cutting tool 36 can access the workpiece 8 with a margin. Therefore, interference with the peripheral equipment and the like is prevented, and the processing work is easily performed.

The holding jig 48 holds the support portion 910 detachably in the detaching direction. In a state in which the support portion 910 is held by the holding jig 48, the connecting portion 920 is located on the downstream side in the detaching direction.

The connecting portion 920 is located on the downstream side in the detaching direction as described above, so that the picker 71 can grasp the connecting portion 920 while avoiding interference with the holding jig 48. Therefore, it facilitates the grasping or the movement of the adapter 9 by the picker 71. In addition, the attachment or detachment of the adapter 9 can be performed in the holding jig 48 while avoiding the interference with the picker 71.

### <Reference Signs List>

- 1: Cutting machine
- 1A: Cutting machine
- 2: Processing machine body
- 3: Loading device
- 8: Workpiece
- 9: Adapter
- 10: Housing

- 32: Spindle motor
- 36: Cutting tool
- 48: Holding jig
- 55: Stocker
- 60: Lifting device
- 70: Transfer device
- 71: Picker

## Claims

1. An adapter (9) for a cutting machine (1) comprising:
a support portion (910) abutting against an outer peripheral portion of a plate-shaped workpiece (8) and being configured to support the plate-shaped workpiece (8); and
a connecting portion (920) connecting to the support portion (910), surrounding the outer peripheral portion and the support portion (910), and forming a gap (921a) between the connecting portion (920) and the outer peripheral portion,
wherein the adapter (9) for the cutting machine (1) is configured to be held by a holder of the cutting machine (1).

2. The adapter (9) according to claim 1,
wherein the connecting portion (920) has a mountain-shaped cross section protruding toward the outer peripheral portion.

3. The adapter (9) according to claim 1 or 2,
wherein the connecting portion (920) is integrally connected to the support portion (910).

4. The adapter (9) according to any one of claims 1 to 3,
wherein the gap (921a) has an arc shape, and
wherein a central angle of the arc shape is 90 degrees or more and 120 degrees or less.

5. The adapter (9) according to any one of claims 1 to 4,
wherein the support portion (910) includes an engaging portion (72B, 73B) configured to engage with the holder.

6. The adapter according to any one of claims 1 to 5,
wherein the holder is configured to hold the support portion (910) detachably in a detaching direction, and
wherein the connecting portion (920) is located on a downstream side in the detaching direction, when the support portion (910) is held by the holding portion.
